Europäisches Patentamt

European Patent Office

Office européen des brevets

(11) Veröffentlichungsnummer : **0 122 216**
**B1**

(12) **EUROPÄISCHE PATENTSCHRIFT**

(45) Veröffentlichungstag der Patentschrift :
**15.06.88**

(21) Anmeldenummer : **84630052.3**

(22) Anmeldetag : **03.04.84**

(51) Int. Cl.⁴ : **E 01 H   5/06, A 01 G   1/12,
E 01 H   1/10, E 02 F   5/28//
A01B35/16**

(54) **Räumgerät, insbesondere Schneeräumer.**

(30) Priorität : **05.04.83 LU 84731**

(43) Veröffentlichungstag der Anmeldung :
**17.10.84 Patentblatt 84/42**

(45) Bekanntmachung des Hinweises auf die Patenterteilung : **15.06.88 Patentblatt 88/24**

(84) Benannte Vertragsstaaten :
**AT BE CH DE FR GB IT LI NL SE**

(56) Entgegenhaltungen :
**DE-C-  976 328
FR-A- 1 409 579
GB-A-  753 478
LU-A-   84 731
US-A- 1 430 608
US-A- 2 532 652
US-A- 2 889 640
US-A- 3 103 678
US-A- 3 666 020
US-E-   23 411**

(73) Patentinhaber : **Lenert, Eugène
6, rue de l'église
Biwer (LU)**

(72) Erfinder : **Lenert, Eugène
6, rue de l'église
Biwer (LU)**

(74) Vertreter : **Weydert, Robert et al
OFFICE DENNEMEYER S.à.r.l. P.O. Box 1502
L-1015 Luxembourg (LU)**

EP 0 122 216 B1

## Beschreibung

Die Erfindung betrifft ein Räumgerät, insbesondere Schneeräumer nach dem Oberbegriff des Anspruches 1.

Ein Räumgerät mit diesen Merkmalen zeigt die Fig. 4 der DE-C-976 328. Dabei sind die Räumelemente senkrecht in bezug auf die zu reinigende oder zu bearbeitende Fläche angeordnet. Die Räumelemente berühren den Untergrund aber nur punktförmig, so dass zur Reinigung einer breiteren Fläche viele Räumelemente sehr dicht nebeneinander angebracht werden müssen. Selbst dann ist die Reiningungsleistung aber noch sehr unvollkommen. Ausserdem neigen die vorgesehenen Stahlblechkränze oder Bürstenkränze der Räumelemente die ja auf dem Untergrund abrollen müssen, zu einer raschen Abnützung und müssen öfters ersetzt werden. Stahlblechkränze kommen dabei zum Reinigen von Strassen, öffentlichen Wegen oder dergleichen wegen des zu erwartenden Lärms während dem Betrieb wohl nicht in Frage. Bürsten dagegen haben den Nachteil, dass sie schon nach kurzer Betriebsdauer ihre Wirksamkeit weitgehend verlieren durch Ansammlung von Schmutz oder Schnee, der zwischen den einzelnen Borsten hängen bleibt. Bürsten sind deshalb nur geeignet zum Entfernen von Staub, trockenen Abfällen und dergleichen. Das bekannte Gerät dient auch hauptsächlich als Bodenbearbeitungsgerät und ist als Räumgerät weniger geeignet. Bei Anwendung als Räumgerät kommen eigentlich nur Räumelemente mit Bürsten in Frage, die aber die erwähnten Nachteile aufweisen.

Ein ähnliches Räumgerät zeigt die NL-A-113 757. Dabei stehen die ebenfalls mit Kranzbürsten versehenen Räumelemente senkrecht in bezug auf die zu reinigende Fläche. Auch diese bekannte Vorrichtung hat eine sehr unbefriedigende Reinigungsleistung.

Andere bekannte Schneeräumer oder Schneepflüge haben eine einzige quer zur Fortbewegungsrichtung des Schneepfluges angeordnete, im wesentlichen stillstehende Räumschaufel. Diese Räumschaufel, welche möglichst nahe über die Strassenoberfläche bewegt wird ist nicht nur einer wesentlichen Beschädigungsgefahr ausgesetzt, sondern beschädigt auch die Strassendecke bei Strassenunebenheiten, vorstehenden Kanaldeckeln, Bürgersteigkanten und dergleichen. Diese Gefahr ist um so grösser je näher man die untere Kante der feststehenden Räumschaufel an die Strassenoberfläche heranbringt, um den Schnee möglichst vollständig fortzuräumen. Eine vollständige Forträumung des Schnees ist mit den bekannten Schneepflügen jedoch ausgeschlossen, denn hierzu müsste die untere Kante der Räumschaufel ständig über die Strassenoberfläche gleiten, und selbst dann würde noch Schnee in Vertiefungen oder dergleichen liegen bleiben. Ausserdem ist der bekannte Schneepflug geräuschintensiv im Betrieb, da er, insbesondere bei unebenem Strassenbelag immer wieder mit der Strassenoberfläche, insbesondere mit Installationserhebungen, in Berührung kommt und dabei harte und laute Schläge auftreten. Ausserdem schwingt das Fahrzeug an dem der Schneepflug befestigt ist stark auf und ab, insbesondere bei unebenem Strassenbelag, wodurch das Aufschlagen der feststehenden Räumschaufel gegen die Strassenoberfläche noch verstärkt wird.

Es ist auch bekannt bei Schneefräsen oder dergleichen, siehe z. B. US-A-3 103 678 oder FR-A-1 409 579 die Bauteile, welche mit dem Boden in Berührung kommen können aus Gummi oder dergleichen herzustellen, um harte Schläge während dem Betrieb oder rasche Abnützung zu verhindern.

Aufgabe der Erfindung ist es, ein einfaches, abnutzungsarmes Räumgerät zu schaffen, das bei geräuschlosem Betrieb Schlamm, eine Schneedecke oder dergleichen im wesentlichen vollständig forträumen kann, ohne dass dabei die Gefahr einer Beschädigung des Gerätes noch der Strasse zu befürchten ist.

Erfindungsgemäss wird diese Aufgabe durch die Merkmale des kennzeichnenden Teiles des Anspruches 1 gelöst.

Zum Reinigen einer Fläche, z. B. zum Entfernen von Schlamm, Matsch, Schnee oder dergleichen, wird das Räumgerät aus einer hochgeschwenkten Transportstellung auf die zu reinigende Fläche aufgesetzt. Unter dem Einfluss des Gewichtes des Räumgerätes legen sich dabei die äusseren gummielastischen Ringe der Räumelemente mit ihrem unteren bodennahen Bereich im wesentlichen flach auf die zu säubernde Fläche auf. Während der Fortbewegung des Räumgerätes werden die Räumelemente um ihre Drehachsen in Rotation versetzt. Die Räumelemente rollen dabei nicht einfach auf der zu reinigenden Fläche ab, sondern sie werden unter der Belastung des Gewichtes des Räumgerätes an diese angedrückt und schräg zu ihren Drehachsen darüber hinweg gedrückt oder gezogen, wodurch sie sich zum Teil auf die zu reinigende Fläche anschmiegen. Man hat gefunden dass sich die freie Kante eines jeden Ringes aus gummiartigem Werkstoff auf einer Länge, die etwa dem halben Aussendurchmesser des Räumelementes entspricht, gegen den Boden anlegt. Die elastischen Ringe der Räumelemente verformen sich dabei und führen eine Walkarbeit aus, ähnlich wie der auf der Strasse ablaufende Reifen eines Fahrzeuges, wobei aber die Verformung durch das Walken wesentlich stärker als bei dem Fahrzeugreifen ist, da die Räumelemente in Schräglage über den Untergrund gezogen oder geschoben werden. Jedes Räumelement bearbeitet soweit einen Streifen beträchtlicher Breite der zu reinigenden Fläche. Die Räumelemente werden durch elastische Verformung gegen den Boden angedrückt und befreien diesen im wesentlichen restlos von Schmutz, Abfällen, Schnee oder dergleichen in schrubbender oder radierender Arbeitsweise. Dieses elastische Andrücken geschieht jedoch so sanft, dass auch weiche Untergründe, wie z. B. Wiesen, Felder, Parkanlagen, Wälder usw. gereinigt werden können ohne die Grasnarbe, den Waldboden usw. zu beschädigen. Das Gerät entsprechend der Erfindung findet deshalb auch eine breite Anwendung in der Landwirtschaft. Es arbeitet geräuschlos, unterliegt nur einer minimalen Abnützung und räumt Schlamm oder andere Verunreinigungen und auch Schneedecken fast vollständig weg selbst bei unebenen Strassen oder sogar in Ecken, zwischen den Strassenoberflächen und einem höher liegenden Bürgersteig, was bisher mit keinem Räumgerät erreicht werden konnte.

Ein Räumgerät mit einem einzigen Räumelement eignet sich insbesondere zum Reinigen von Vertiefungen wie z. B. Strassenrinnen oder Abflussgräben. Zum Reinigen einer breiteren Fläche hat das Räumgerät dagegen zwei oder mehrere Räumelemente, welche in Richtung der Räumerlängsachse in Abstand voneinander angeordnet und in Querrichtung des Räumers gegeneinander versetzt sind.

Vorzugsweise sind die Räumelemente an einem schräg zur Längsachse des Räumers oder Fortbewegungsrichtung verlaufenden Balken gelagert, dessen Schrägstellung in bezug auf die Längsachse einstellbar sein kann. Die Räumelemente können durch eine Schnellschlussverbindung an dem Balken aufgehängt sein. Dies gestattet eine schnelle Umrüstung des Gerätes zum Reinigen von Vertiefungen mit einem Räumelement oder breiten Strassendecken mit mehreren Räumelementen.

Als Räumelemente können speziell gefertigte besonders abriebsfeste gummiartige oder gummi-elastische Ringe benutzt werden, die an einem mittleren, starren Nabenteil zu befestigen sind. Besonders vorteilhaft ist es für diese Ringe, halbe, über die Lauffläche senkrecht zu ihrer Drehachse durchgetrennte Kraftfahrzeugreifen, insbesondere abgelaufene Lastkraftfahrzeugreifen, zu verwenden. Bei einem für Versuchszwecke gebauten Räumgerät entsprechend der Erfindung wurde festgestellt, dass solche halbe Lastkraftfahrzeugreifen als gummi-elastische Elemente eine lange Nutzdauer haben und die Schneedecke vollständig ohne Lärmbelästigung wegräumen. Abgelaufene Kraftfahrzeugreifen stehen in fast unbegrenzter Anzahl zur Verfügung und können somit unerwartet weiter benutzt werden. Dies wirkt sich auch günstig auf die Herstellungskosten des Gerätes aus.

Das Räumgerät entsprechend der Erfindung eignet sich aber nicht nur zum Wegputzen einer Schneedecke sondern ist allgemein für sämtliche Reinigungsarbeiten einzusetzen, z. B. zum Entfernen von Schlamm, Kies, Schotter, Sand oder anderen Verunreinigungen von Fahrbahnen, Wegen, aus Strassengräben usw.

Als gummiartiger Werkstoff kommt Naturgummi, synthetischer Kautschuk oder Elastomer in Frage.

Weitere Merkmale des Räumers sind in Unteransprüchen gekennzeichnet. Ausführungsbeispiele des Räumgerätes sind in den Zeichnungen dargestellt und werden im folgenden ausführlicher beschrieben, es zeigen :

Figur 1 eine Darstellung in Draufsicht des Räumgerätes.

Figur 2 eine Seitenansicht des Räumgerätes in Richtung des Pfeiles P nach Figur 1.

Figur 3 eine ähnliche Ansicht wie Figur 2 eines Räumgerätes während dem Betrieb.

Das Räumgerät 1 besteht aus einem Traggestell 2, einem an dem Traggestell befestigten Balken 3 und mehreren an dem Balken drehbar aufgehängten und nach unten geneigten korb-, teller- oder auch schüsselartigen, konkaven, kreisrunden Räumelementen 4. Das Traggestell 2 ist an einem Ende mit einer Aufhängevorrichtung 5 versehen zur Ankopplung an die Dreipunkthydraulik eines Kraftfahrzeuges. Das Traggestell 2 hat ein Tragrohr 8, das sich in Richtung der Räumerlängsachse 7 über die Räumelemente 4 nach hinten erstreckt. Das Tragrohr 8 ist über Stützstreben 9 abgestützt. Das Tragrohr 8 hat an seinem hinteren Ende einen seitlich und nach unten weisenden Arm 10, der an dem Balken 3 befestigt ist. In der Nähe des vorderen Endes des Tragrohres 8 ist ein weiterer längerer Arm 11 vorgesehen, der ebenfalls seitlich und nach unten weist. Der Balken 3 ist bei 12 und 13 mit dem kurzen Tragarm 10 beziehungsweise dem langen Tragarm 11 verbunden und dadurch in Richtung zur Längsachse 7 des Räumgerätes oder zur Fortbewegungsrichtung der Zugmaschine schräggestellt.

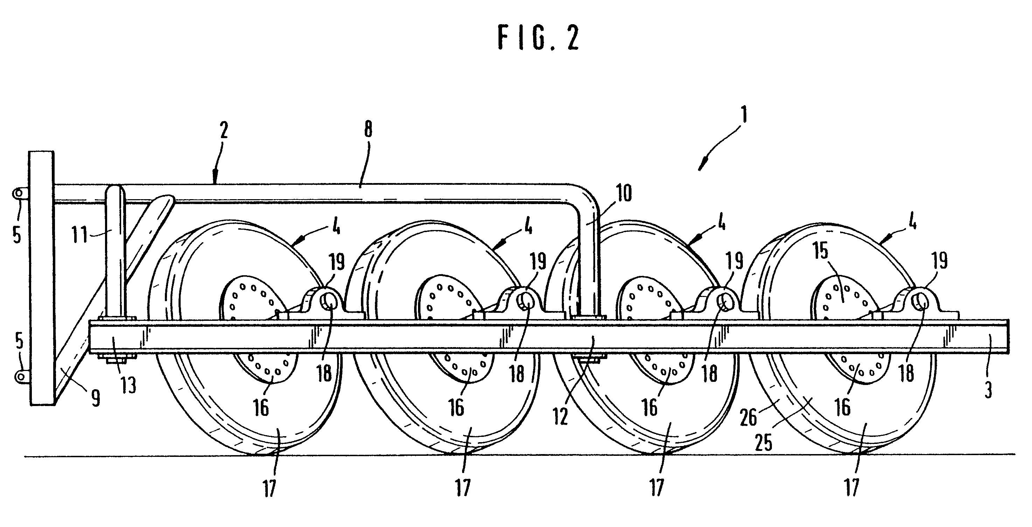

Die Räumelemente 4 weisen mit ihren konkaven Seiten schräg in bezug auf die Längsachse 7 des Räumgerätes 1 nach vorne und nach unten. Die Räumelemente sind in Richtung der Räumerlängsachse 7 in Abstand voneinander angeordnet und sind ebenfalls in Querrichtung des Räumers gegeneinander versetzt. Die Drehachsen X1 bis X4 der Räumelemente 4 liegen in Vertikalebenen, welche schräg zur Räumerlängsachse 7 verlaufen. Ausserdem sind die Drehachsen X1 bis X4 der Räumelemente in diesen Vertikalebenen von oben hinten nach vorne unten geneigt, wie am besten aus Figur 2 ersichtlich ist.

Jedes Räumelement 4 hat eine mittlere, starre Nabe 15, welche aus zwei miteinander verschraubten Scheiben 16 besteht, zwischen welchen ein elastischer oder flexibler Ring 17 aus gummiartigem oder gummielastischem Werkstoff eingeklemmt ist, der wenigstens zum Teil etwa radial in bezug auf die Drehachse des Räumelementes 4 verläuft und den konkav geformten radial äusseren Bereich des Räumelementes bildet. Der Ring 17 hat eine kreisförmige radiale Seitenflanke 25, die etwa in der Ebene der Nabe 15 und der Scheibe 16 liegt und an ihrem inneren Umfang zwischen diesen Scheiben 16 festgeschraubt ist, am äusseren Umfang der Seitenflanke 25 ist ein im wesentlichen senkrecht zu dieser stehender Umfangsflansch oder -bund 26 angeformt. Der elastische Ring 17 kann einen etwa halbtoroidförmigen, L- oder auch hakenförmigen Querschnitt aufweisen. Der gummielastische Ring 17 kann durch Stahl- oder Kordeinlagen verstärkt sein und hat vorzugsweise die Querschnittsform eines halben, senkrecht zu seiner Laufachse durchgetrennten Fahrzeugreifens der an seinem radial inneren Umfangsbereich zwischen die Scheiben 16 festgeklemmt ist. Er kann aus abgelaufenen Lastkraftfahrzeugreifen hergestellt werden. Es ist auch möglich die radiale Seitenflanke 25 des Ringes 17 aus einem dünnen Blechring herzustellen, an dem dann der gummiartige Umfangsflansch oder -bund 26 befestigt ist.

Jede Nabe 15 ist über einen Schaft 18 in einem auf dem Balken 3 vorgesehenen Lager 19 drehbar aufgehängt. Der Schaft 18 ist in dem Lager 19 durch eine schnellösbare und wiederherstellbare Halterung (nicht dargestellt) axial festgelegt.

Der Tragbalken 3 ist vorzugsweise in einem Winkel von 15 bis 45° zur Längsachse 7 des Räumers schräggestellt. Dieser Winkel kann einstellbar sein. In diesem Falle kann die Aufhängung 12 des Balkens 3 an dem kurzen Tragarm 10 als Drehlager ausgebildet sein. Zwischen dem vorderen Ende des Balkens 3 und dem langen Tragarm 11 ist dann eine einstellbare Halterung mit Feststellmöglichkeit (nicht dargestellt) erforderlich.

Der Winkel zwischen den Vertikalebenen der Drehachsen X1-X4 der Räumelemente 4 und der Längsachse 7 des Räumers beträgt vorzugsweise 15 bis 45°.

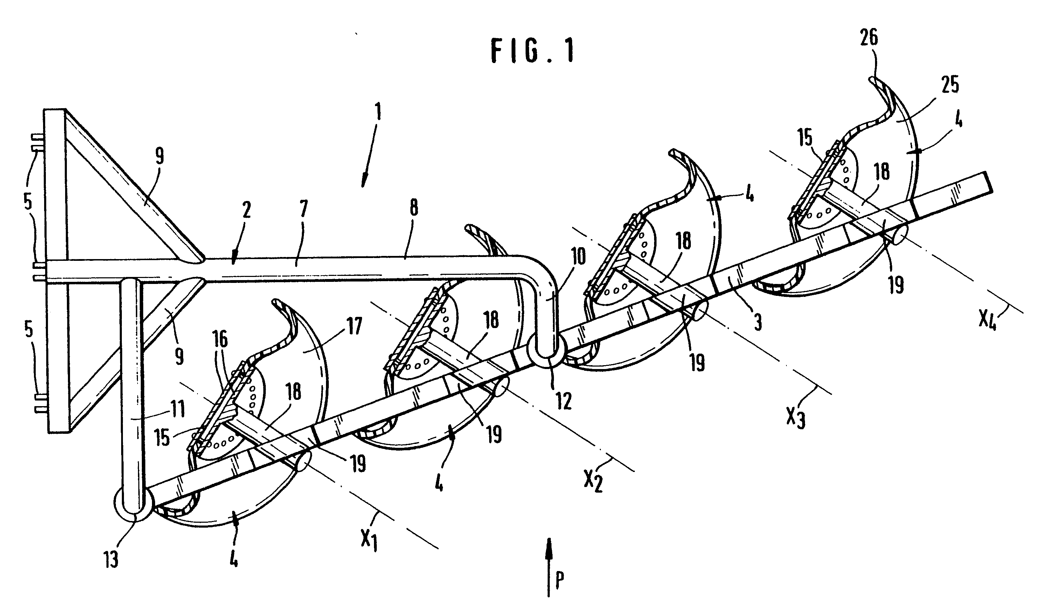

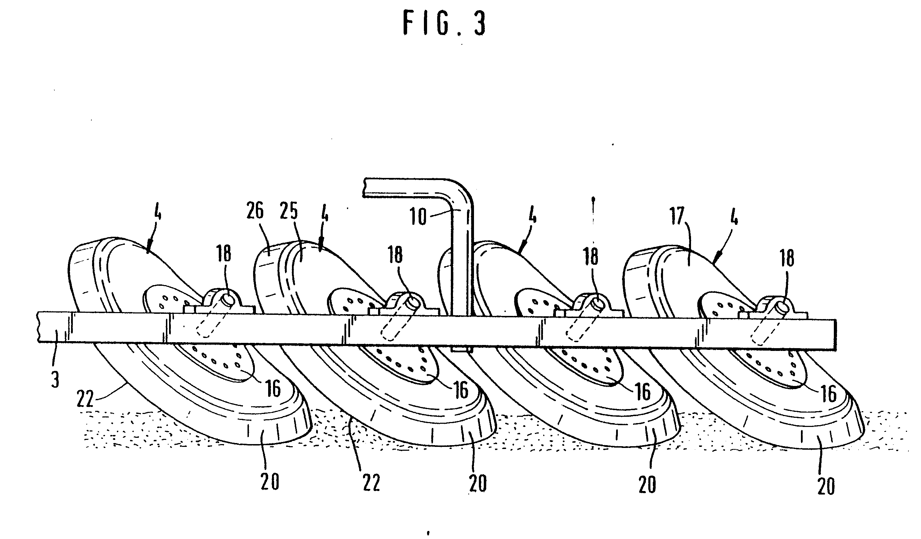

In den Figuren 1 und 2 ist das Gerät in einer angehobenen Transportstellung dargestellt. Die Figur 3 zeigt ein Gerät entsprechend der Erfindung in Arbeitsstellung. Das Gerät entsprechend Figur 3 hat den gleichen Aufbau wie das Gerät nach den Figuren 1 und 2, mit der Ausnahme, dass in Figur 3 die Räumelemente stärker geneigt sind. Die Räumelemente können einen Winkel von etwa 35 bis 55° mit einer Horizontalebene oder mit der zu bearbeitenden Fläche bilden. In der Figur 3 ist deutlich zu erkennen, dass die unteren Bereiche 20 der gummi-elastischen Ringe 17 sich mit ihrer freien Umfangskante 22 längs einer wesentlichen Länge auf die zu bearbeitende Fläche auflegen. Dabei erfassen die Räumelemente das zu räumende Gut auf einer wesentlichen Breite in ihren konkaven Innenseiten und schaufeln es durch schrubbende oder radierende Bearbeitung der zu reinigenden Fläche seitlich weg.

**Patentansprüche**

1. Räumgerät, insbesondere Schneeräumer, mit wenigstens einem an einem Traggestell (2) drehbar aufgehängten konkaven Räumelement (4), dessen Drehebene schräg zur Längsrichtung des Gerätes verläuft, und das mit seiner konkaven Seite in bezug auf die Räumerlängsrichtung nach vorne weist, wobei das Räumelement (4) mit einem äusseren elastischen oder flexiblen Ring (17) versehen ist, der einen radial inneren Teil (25) aufweist, welcher im wesentlichen radial in bezug auf die Drehachse (18) des Räumelementes (4) verläuft und einen radial äusseren in Axialrichtung vorstehenden äusseren Teil (26) aufweist, wobei die Drehachse (18) des Räumelementes (4) in einer Vertikalebene liegt, welche schräg zur Räumerlängsachse (7) verläuft, dadurch gekennzeichnet, dass die Drehachse (18) des Räumelementes (4) in der Vertikalebene von oben hinten nach vorne unten geneigt ist, dass das Räumelement (4) mit seiner konkaven Seite nach unten weist, und dass der Ring (17) aus gummiartigem Werkstoff besteht.

2. Räumgerät nach Anspruch 1, dadurch gekennzeichnet, dass zwei oder mehrere Räumelemente (4) in Richtung der Räumerlängsachse in Abstand voneinander angeordnet und in Querrichtung des Räumers gegeneinander versetzt sind.

3. Räumgerät nach Anspruch 1 oder 2, dadurch gekennzeichnet, dass die Räumelemente (4) an einem schräg zur Längsachse verlaufenden Balken (3) gelagert sind.

4. Räumgerät nach Anspruch 3, dadurch gekennzeichnet, dass die Räumelemente (4) schnellösbar am Balken (3) gelagert sind.

5. Räumgerät nach Anspruch 3 oder 4, dadurch gekennzeichnet, dass die Schrägstellung des Balkens (3) in bezug auf die Längsachse einstellbar ist.

6. Räumgerät nach einem der Ansprüche 1 bis 5, dadurch gekennzeichnet, dass jedes Räumelement (4) eine mittlere starre Nabe (15) aufweist, die den elastischen oder flexiblen Ring (17) trägt, wobei dieser Ring (17) eine kreisförmige Seitenflanke (25) aus gummiartigem Werkstoff hat, die an ihrem inneren Umfang mit der Nabe (15) verbunden ist und an ihrem äusseren Umfang mit einen angeformten im wesentlichen senkrecht zu der Seitenflanke stehenden Umfangsflansch (26) aufweist.

7. Räumgerät nach einem der Ansprüche 1 bis 6, dadurch gekennzeichnet, dass der Ring (17) durch Stahl- oder Kordeinlagen verstärkt ist.

8. Räumgerät nach Anspruch 7, dadurch gekennzeichnet, dass der elastische Ring (17) aus einem halben, senkrecht zu seiner Achse durchgetrennten Kraftfahrzeugreifen besteht, der an seinem radial inneren Umfangsbereich zwischen zwei Nabenplatten (16) festgeklemmt ist.

9. Räumgerät nach einem der Ansprüche 3 bis 5, dadurch gekennzeichnet, dass der Balken (3) einen Winkel von 15 bis 45° mit der Längsachse bildet.

10. Räumgerät nach einem der Ansprüche 1 bis 9, dadurch gekennzeichnet, dass die Vertikalebene der Drehachse (18) des Räumelementes (4) einen Winkel von 15 bis 45° mit der Räumerlängsrichtung bildet.

11. Räumgerät nach einem der Ansprüche 1 bis 10, dadurch gekennzeichnet, dass die Räumelemente (4) einen Winkel von etwa 35 bis 55° mit einer Horizontalebene bilden.

**Claims**

1. Clearing appliance, especially an appliance for clearing snow, comprising at least one concave clearing element (4) rotatably mounted on a support frame (2), with the plane of rotation of the clearing element oriented obliquely with respect to the longitudinal direction of the appliance and with the concave side of the clearing element being oriented forwardly with respect to the longitudinal direction of the clearing appliance, said clearing element (4) being provided with an outer elastic or flexible ring (17) having a radial inner portion (25) extending substantially radially with respect to the axis of rotation (18) of the clearing element (4) and a radial outer portion (26) protruding in axial direction, with the axis of rotation (18) of the clearing element (4) being disposed in a vertical plane extending obliquely with respect to the longitudinal axis (16) of the clearing appliance, characterized in that the axis of rotation (18) of the clearing element (4) is inclined in the vertical plane from a rear upper to a front lower location, that the clearing element (4) faces with its concave side downwardly, and that the ring (17) consists of rubber-like material.

2. Clearing appliance according to claim 1, characterized in that two or more clearing elements (4) are arranged spaced from one another along the longitudinal axis of the clearing appliance and offset from one another in transverse direction of the appliance.

3. Clearing appliance according to claim 1 or 2, characterized in that the clearing elements (4) are mounted on a beam (3) running obliquely with respect to the longitudinal axis.

4. Clearing appliance according to claim 3, characterized in that the clearing elements (4) are mounted on the beam (3) so as to be quickly releasable therefrom.

5. Clearing appliance according to claim 3 or 4, characterized in that the oblique position of the beam (3) with respect to the longitudinal axis is adjustable.

6. Clearing appliance according to anyone of claims 1 to 5, characterized in that each clearing element (4) has a central rigid hub (15) supporting the elastic or flexible ring (17), said ring (17) having a circular side flank (25) of rubber-like material connected to the hub (15) at its internal circumference and having an integral peripheral rim (26) substantially perpendicular to the side flank around its outer circumference.

7. Clearing appliance according to anyone of claims 1 to 6, characterized in that the ring (17) is reinforced by steel or chord plies.

8. Clearing appliance according to claim 7, characterized in that the elastic ring (17) consists of half a motor vehicle tire cut vertically to its axis of rotation, which is clamped between two hub plates (16) at its radial internal circumference.

9. Clearing appliance according to anyone of claims 3 to 5, characterized in that the beam (3) forms an angle of 15 to 45° with the longitudinal axis.

10. Clearing appliance according to anyone of claims 1 to 9, characterized in that the vertical plane of the axis of rotation (18) of the clearing element (4) forms an angle of 15 to 45° with the longitudinal direction of the clearing appliance.

11. Clearing appliance according to anyone of claims 1 to 10, characterized in that the clearing elements (4) form an angle of about 35 to 55° with a horizontal plane.

**Revendications**

1. Engin de déblaiement, en particulier chasse-neige, avec au moins un élément de déblaiement (4) concave, orientable et suspendu à un châssis porteur (2), élément de déblaiement dont la surface tournante fonctionne obliquement par rapport au sens longitudinal de l'engin, et qui présente vers l'avant sa face concave par rapport à la direction longitudinale de l'engin, l'élément de déblaiement (4) étant prévu avec un disque (17) extérieur élastique ou flexible qui comporte une pièce interne radialement (25) laquelle fonctionne essentiellement radialement par rapport à l'axe de rotation (18) de l'élément de déblaiement (4) et comporte une pièce radialement extérieure (26) dirigée vers l'avant en direction axiale, l'axe de rotation (18) de l'élément de déblaiement (4) étant placé dans un plan vertical lui-même oblique par rapport à l'axe longitudinal (7) de l'engin de déblaiement, caractérisé en ce que l'axe de rotation (18) de l'élément de déblaiement (4) est incliné de haut en bas et de l'arrière vers l'avant, en ce que l'élément de déblaiement (4) présente sa face concave vers le bas et que le disque (17) est constitué d'un matériau du genre caoutchouc.

2. Engin de déblaiement suivant la revendication 1 caractérisé en ce que deux ou plusieurs éléments de déblaiement (4) sont disposés à distance les uns des autres dans la direction de l'axe longitudinal de l'engin de déblaiement et ils sont décalés les uns par rapport aux autres dans le sens transversal de l'engin de déblaiement.

3. Engin de déblaiement suivant l'une quelconque des revendications 1 ou 2 caractérisé en ce que les éléments de déblaiement (4) sont placés sur un longeron (3) disposé obliquement par rapport à l'axe longitudinal.

4. Engin de déblaiement suivant la revendication 3 caractérisé en ce que les éléments de déblaiement (4) sont placés sur le longeron (3) de façon à pouvoir être rapidement démontés.

5. Engin de déblaiement suivant l'une quelconque des revendications 3 ou 4, caractérisé en ce que la position oblique du longeron (3) est réglable par rapport à l'axe longitudinal.

6. Engin de déblaiement suivant l'une quelconque des revendications 1 à 5 caractérisé en ce que chaque élément de déblaiement (4) présente un moyeu central (15) rigide qui porte le disque élastique ou flexible (17), ce disque (17) ayant des flanc latéraux (25) circulaires en matériau du genre caoutchouc, les flancs étant reliés au moyeu (15) suivant leur bord interne et présentant, sur leur bord externe, une collerette circulaire (26) de forme, disposée, par nature, perpendiculairement au flanc latéral (25).

7. Engin de déblaiement suivant l'une quelconque des revendications 1 à 6 caractérisé en ce que le disque (17) est renforcé par des inserts en acier ou en textile.

8. Engin de déblaiement suivant la revendication 7 caractérisé en ce que le disque élastique (17) est constitué d'un demi-pneu de véhicule à moteur coupé perpendiculairement à son axe et qui est fixé par pincement dans sa zone radialement interne entre deux plaques de moyeu (16).

9. Engin de déblaiement suivant l'une quelconque des revendications 3 à 5 caractérisé en ce que le longeron (3) forme un angle de 15 à 45° avec l'axe longitudinal.

10. Engin de déblaiement suivant l'une quelconque des revendications 1 à 9 caractérisé en ce que le plan vertical de l'axe de rotation (18) de l'élément de déblaiement (4) forme un angle de 15 à 45° avec la direction longitudinale de l'engin de déblaiement.

11. Engin de déblaiement suivant l'une quelconque des revendications 1 à 10 caractérisé en ce que les éléments de déblaiement (4) forment un angle d'environ 35 à 55° avec un plan horizontal.

# FIG.1

0 122 216

# FIG. 2

0 122 216

# FIG. 3

0 122 216